# EUROPEAN PATENT APPLICATION

(11) **EP 2 811 714 A2**
(43) Date of publication of application: **10.12.2014**
(21) Application number: 14171002.0
(22) Date of filing: 03.06.2014
(51) Int. Cl.: H04L 29/06

(54) **System and method for computer system security**

(30) Priority: 03.06.2013 US 201313908390
(71) Applicant: eSentire, Inc., Cambridge, ON N1T 1Z6 (CA)
(72) Inventor: Maxwell, David, Cambridge, ON N1T 1Z6 (CA); Gajek, Jacob, Cambridge, ON N1T 1Z6 (CA); Horvath, Akos, Cambridge, ON N1T1Z6 (CA); Baniski, Ilija, Cambridge, ON N1T 1Z6 (CA); Gowman, Rich, Cambridge, ON N1T 1Z6 (CA)
(74) Representative: Louis Pöhlau Lohrentz

(57) **Abstract**

A system, method and computer program product that is capable of security monitoring, threat analysis and client notification for a computer system is provided. This Managed Security Service (MSS) includes a log data sensor component providing a log interceptor service. Log data is collected from server and other equipment log activity and processed using a stateful network security policy to detect security threats and generate an appropriate action.

## Description

### FIELD

The present matter relates to a system and method for securing a system of computers by monitoring network traffic entering and exiting the system as well as server and other equipment logging data saved in data stores, using this information to identify data patterns associated with unfavourable activities, then applying these patterns to future data sets to detect potential security threats.

### BACKGROUND

Computer security is a field of information security that includes processes and mechanisms to protect computer-based equipment, information and services from unintended and unauthorized access, change or destruction. This form of security may include tracking authorized activities, restricting unauthorized activities, monitoring and preventing access by untrustworthy sources, and preparing for unplanned events and natural disasters. Managed Security Services (MSSs) can provide real-time security monitoring, threat analysis and client notification to maximize response time and efficiency. Within the MSS, human-qualified contextual awareness through the use of a staffed Security Operations Center (SOC) can increase detection efficiency and management of potential security threats. A MSS is only effective if the threat analysis software that it employs can efficiently and accurately detect potential security threats.

### BRIEF DESCRIPTION OF THE DRAWINGS

In order that the subject matter may be readily understood, embodiments are illustrated by way of examples in the accompanying drawings, in which:
**Figure 1** is a block diagram of a MSS configured to monitor network traffic and server and equipment logging data, detect unfavorable activity therein and generate an alert to indicate when action must be taken;
**Figure 2** is a block diagram showing details of the log data sensor within the MSS configured to collect and analyze logging data from components of a monitored computer system including components that are configured to log data using the syslog standard and components that do not use such a standard; and
**Figure 3** is a flowchart showing operations for a rule processing engine within the log data sensor for processing syslog format log data in accordance with non-limiting examples.

For convenience, like numerals in the description refer to like structures in the drawings.

### DETAILED DESCRIPTION

A system, method and computer program product that is capable of security monitoring, threat analysis and client notification for a computer system is provided. This Managed Security Service (MSS) includes a log data sensor component providing a log interceptor service. Log data is collected from server and other equipment log activity and processed using a stateful network security policy to detect security threats and generate an appropriate action.

In one non-limiting aspect of the MSS, a Security Operations Centre (SOC) is included. This staffed operation adds human-qualified contextual awareness to the detection and management of security threats. Information regarding the security state of the system is provided to the SOC by various processing agents such as a log data sensor component.

The log interceptor service employs an electronic sensor to monitor server and network equipment logging data within the monitored computer system. More specifically, the log interceptor service electronic sensor collects, parses, interprets, logs and alerts the SOC to potential security events. The sensor is able to generate actions in response to events of interest that are transmitted to the SOC in real-time. An event of interest is determined through the use of a configurable stateful network security policy implemented in a rule processing engine. The evaluation of events in the log data may define stateful evaluation data which can be used to assist the evaluation of subsequent events.

The logs monitored by the log data sensor may include those produced by network devices (firewalls, switches, routers, VPN gateways), security monitoring devices (intrusion prevention systems, intrusion detection systems), operating systems (e.g. Windows™, Linux™, MacOS™ , Android™), databases (Oracle™, Microsoft SQL Server™, IBM DB2™), user directories such as LDAP and Microsoft Active Directory, web proxies and web servers such as BlueCoat™, Apache™, Microsoft Internet Information Server™ and Squid™, as well as off-the-shelf and custom software applications.

The captured logging data is stored, for example, in a raw format for archival and/or processing purposes. Portions (e.g. certain elements or fields) may be extracted and stored for reporting. Stateful evaluation data, including data extracted, may also be stored for evaluation by the policies. The reporting data may be stored to a database. The stateful evaluation data may be stored such as to a memory table and to a database. The same data base may store the reporting data and stateful evaluation data. Policies are compared to the logging data, may store and be responsive to the stateful evaluation data. Policies may be applied as the data comes in, in real-time, or against the stored raw data such as at a later time. A policy can be considered to be a set of rules designed to identify patterns of data. If a policy to detect an event of interest matches the logging data, a corresponding action can be generated. The actions and alerts may also be responsive to stateful evaluation data such as through action conditions and alert conditions described further herein below.

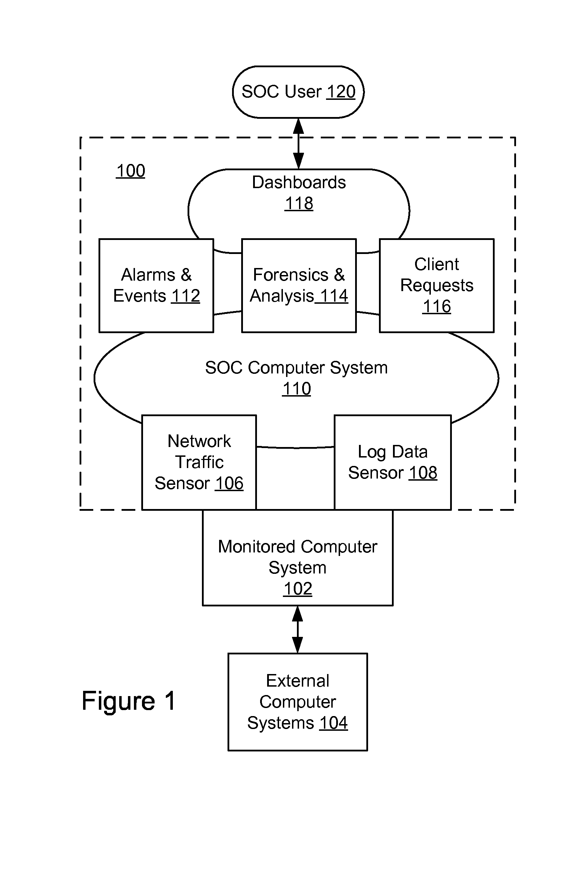

**Figure 1** is a block diagram of an example MSS computer system 100 providing a monitored security service to a monitored computer system 102 (e.g. a client of the MSS). In the example, the illustrated MSS computer system 100 is configured for monitoring network traffic information and monitoring component log data. Monitored computer system 102 represents a MMS client system of computers or other computing devices that are being secured while block 104 represents external computer systems with which monitored computer system 102 may be in communication. Further components of the MSS computer system 100 comprise a network traffic sensor 106 (optional), a log data sensor 108 and a SOC computer system 110 for threat monitoring, analysis and notification. SOC computer system 110 may comprise components (which may be software components, hardware components or combinations thereof) for alarms and events 112, forensics and analysis 114 and client requests 116 facilitated via a user interface such as dashboards 118 to SOC users (e.g. 120).

Dashboards 118 may be presented and user input received via user computers (not specifically shown) such as desktops, laptops, tablets, smartphones, workstations, terminals, etc. in communication with SOC computer system 110. SOC user 120 may receive via the dashboards 118 or other communication means such as email, texts (SMS), audio, etc. MSS information such as alerts and other notifications for review and possible action, where necessary. Dashboards 118 may be configured to accept user input such as, for example, to configure the presenting of such information 112, 114 and 116 as well as to respond to such information and/or to initiate actions.

Network traffic flowing within the monitored computer system 102 as well as into and out of monitored computer system 102 (e.g. to and/or from external computer systems 104) may be monitored by network traffic sensor 106, which intercepts the information and analyzes it to recognize threats and intrusions. It will be apparent that network traffic sensor 106 may comprise one or more computer systems configured to provide the functions and features described. As events of interest are detected at network traffic sensor 106, an action may be generated and notification sent to SOC computer system 110. Network traffic sensor 106 may generate log data that is monitored by the log data sensor 108 as further described below.

It will be apparent that log data sensor 108 and the components of monitored computer system 102, network traffic sensor 106 and SOC computer system 110 are coupled for communication such as via a network. In one example, the network may comprise an enterprise-based local area network of the monitored computer system 102 such that log data sensor 108 may reside within a secured portion of such an enterprise network.

Log data sensor 108 monitors log data of components, such as servers and network equipment, within monitored computer system 102, which may include network traffic sensor 106. Network traffic sensor 106 may be collocated with monitored computer system 102, for example. Log data sensor 108 may be configured to perform monitoring and review of domain controller and system logging, compliance tracking and alerting of log data, and forensic analysis and threat correlation on log data as further described below. As events of interest are detected by log data sensor 108, an action can be performed such as the generation of an alert for transmitting to the SOC User 120 via SOC computer system 110 where it can be evaluated and presented such as via a dashboard 118.

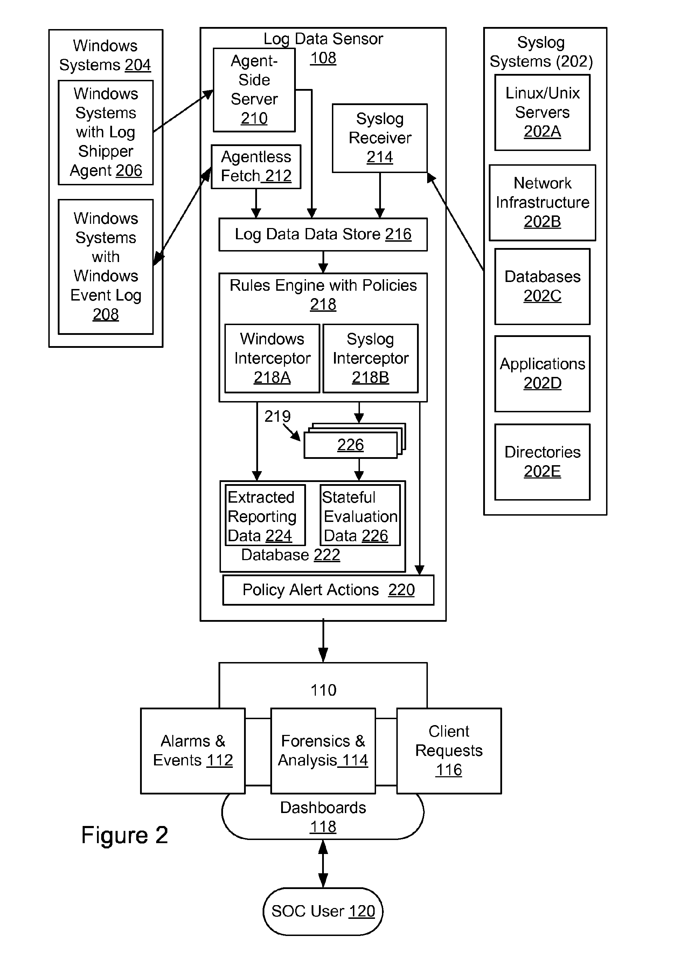

**Figure 2** is a block diagram showing further details of the log data sensor 108 and its interaction with components of monitored computer system 102 and SOC computer system 110. It will be apparent that log data sensor 108 may comprise one or more computer systems configured to provide the functions and features described. The log data sensor 108 may comprise one or more processors, memory and other storage devices and instructions for configuring the processors, when executed, to perform the features and functions described. The log data sensor 108 may comprise communication subsystems to communicate with elements of monitored computer system 102 and/or SOC computer system 110, etc., as well as user input/output devices (e.g. display screen (which may be a touch screen), keyboard, pointing device, etc.) for presenting output and/or receiving input. Log data sensor 108 may be configured with a graphical user interface (not shown) and/or the ability to produce reports, etc.

Log data sensor 108 may collect system logging data from one or more sources such as in monitored computer system 102. In one non-limiting example, log data sensor 108 is configured to collect logging data from servers and other devices that produce logs in the syslog format (e.g. syslog systems 202) and from Windows™-based servers (e.g. Windows systems 204). Syslog is a standard for computer data logging and is standardized within the Syslog working group of the Internet Engineering Task Force (IETF).

Collection of log data by log data sensor 108, for example, from Windows systems 204, may be configured in accordance with one or more models - e.g. a push model and a pull model. In the push model, a Windows server is configured with a log shipper agent (e.g. 206) to collect and send log data to an agent-side server 210. A push model may be used for high-volume servers such as domain controllers. In the pull model, Windows systems with Windows event logs (e.g. 208) are queried by an agent-less fetch component 212. A pull model may be used for low volume servers. The decision to use push vs. pull for Windows servers may be a practical one based on many factors, including whether deploying an agent (e.g. 206) to a particular machine (server) is feasible, whether the ability to buffer and encrypt logged events for network transmission is desired, and other considerations.

Syslog systems 202 that produce log data in syslog format may include but are not limited to Linux™ and/or Unix™ servers 202A, network infrastructure 202B, databases 202C, applications 202D and directories 202E (e.g. LDAP and Microsoft Active Directory). Log data sensor 108 may be configured with a syslog receiver component 214 (e.g. rsyslog) for processing log data in syslog format.

Once log data has been collected, it is stored (e.g. in a data store 216). Log data from Windows systems 204 may be stored in a raw binary format and log data from syslog systems 202 may be stored as raw syslog entries. The transfer of this log data (e.g. from the agent-side servers 210 and 212 and syslog receiver component 214) may be done by a lossless event writer (not shown).

The various stored log data define events that can be compared against policies customized for each log data sensor system (e.g. for Windows system-based log data via windows interceptor 218A and for syslog data via syslog interceptor 218B) at a rule processing engine 218. This evaluation and policy development can utilize customized rules, templates and or filters. A policy can be considered to be a set of rules designed to identify patterns within the log data of data store 216. It is understood that the polices are stored to a memory or other storage device (not shown) for use by log data sensor 108. From time to time, respective policy definitions may be deleted, added and/or amended, etc., to address new threats or implement new strategies for example.

If a policy to detect an event of interest matches respective log data, a corresponding action 220 is generated. This action 220 may also be customized based on several factors including but not limited to the severity of the event and the amount of time in which a response is required. One such action 220 may be an alert sent to the SOC computer system 110. Another action 220 may include sending an email to a member or members (e.g. 120) of the SOC computer system 110 alerting them of the event. In another example, the alert may be direct to a user and/or administrator of the monitored computer system 102.

Certain elements of the log data may be extracted (reporting data 224) and stored to a relational database 222 for reporting. The policies may be configured to extract and/or other wise generate stateful evaluation data to assist with the evaluation of the log data. As described further below, the stateful evaluation data 226 may be maintained in memory tables (e.g. 219) and stored to relational database 222. It will be understood that though one relational database 222 is illustrated, separate databases may be configured and used for reporting data 224 and stateful evaluation data 226.

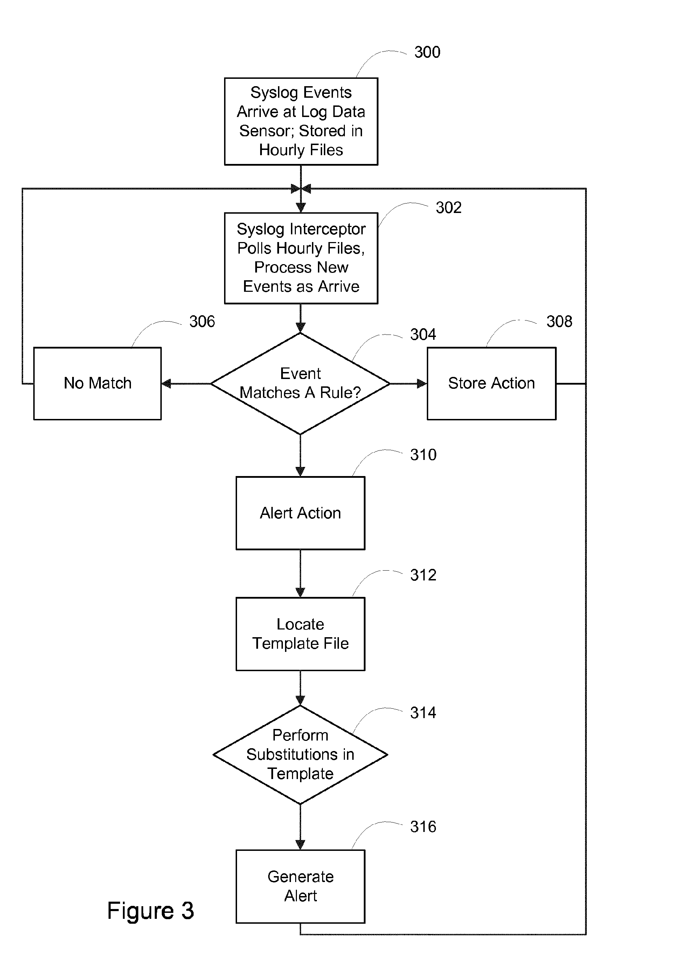

**Figure 3** shows a flowchart of operations, according to one example, for syslog data processing such as performed by the rule processing engine 218 when working with log data. In the example, rule processing engine 218 for syslog data is based on regular expression pattern matching. As syslog events arrive at log data sensor 108 (step 300) the events may be stored in hourly files (e.g. in a raw format). The syslog interceptor 218B may continuously poll the hourly files (step 302) and process new events as they arrive. In another example, such data may be processed after the fact or not in real time per se.

### Actions

Each event is processed by matching against a series of rules (step 304). These rules may be evaluated, such as one-by-one, in the order they are specified in the rules file. In one non-limiting embodiment the structure of each rule may be as follows:
action<NAME><SEVERITY><REGEX><ACTION1><ACTION2> ...

The <NAME> component of the rule above is the rule identifier for reporting and alerting purposes. It indicates the type of logging source that generated the alert, and the control identifier the rule is associated with. For example, OS-LINUX-01 would be the name of the rule for Control 01 (user account created) for the Linux OS platform.

The <SEVERITY> component of the rule described above describes the severity of the rule. This severity is for alerting and escalation purposes. Severity values include but are not limited to critical, high, medium and low.

The <REGEX> component is the regular expression that events must match in order to trigger actions for this rule. This regular expression can also be used to extract fields like user name and source internet protocol (IP) address from the matched events.

### Store Action

The <ACTION> component describes the action that is to be undertaken. Supported actions may include <STORE> and <ALERT>. For example, the <STORE> action generated at step 308 may save a specified portion of the incoming event (for example, a user name) in a memory table 219 for later use. The <ALERT> action generated at step 310 may, in one example, generate an email alert based on a specified email template (step 312).

More specifically, the <STORE> action saves an extracted portion of the event into a memory table 219 for later use. The primary purpose of the <STORE> action is to preserve the value of a field, such as a user name or IP address, from the event in order to perform subsequent filtering, such as whitelisting or blacklisting, or to display the value of the field in an email alert that utilizes template substitution. The structure of a <STORE> action may be as follows:
Store:<TABLENAME>:<ELEMENTNAME>:<FIELD>

Here, the <TABLENAME> component of the action provides the name of the memory table 219 where the field value will be stored.

The <ELEMENTNAME> component of the action is a descriptive name that is associated with the stored value. This may include, for example, "username".

The <FIELD> component of the action specifies which extracted field value to store. If multiple fields are extracted from the event by the regular expression, then $1 refers to the first field, $2 refers to the second field, and so on.

In one example, to achieve both acceptable performance and persistence of state, the store action stores a value to a memory table 219 (such as for performance reasons). Periodically (e.g. every 5 minutes), the contents of all memory tables 219 are saved to a database (e.g. relational database 222) such as a relational database (for example, one hosted by a PostgreSQL DBMS). As noted with reference to Figure 2, one relational database 222 may be used to store reporting data 224 and the stateful evaluation data 226 from store actions for processing of the log data by the policies.

### Alert Action

The structure of an alert action (e.g. as taken in response to a match via step 310) may have several different structures. In one embodiment, the structure of the alert action may be:
alert:<TEMPLATEFILE>

The alert action loads the referenced template file (not shown) at step 312 and then performs any required template substitutions at step 314. Once this is complete, an alert is generated at step 316. In one non-limiting example, the alert may take the form of an email. Template files, policy/rule definitions, filter definitions, etc. may be stored to memory or other storage for use by log data sensor 108.

In another embodiment, the structure of the alert action may be as follows:
alert(<THRESHOLD>):<INDIVIDUALTEMPLATE>:<SUMMARYTEMPLA TE>

This alert action generates an individual alert or a summary alert as determined by the threshold specification. The structure of the threshold specification may have several numeric parameters. In one non-limiting example, five numeric parameters are present and appear as follows:
<THRESHOLDCOUNT>:<THRESHOLDTIME>:<MAXCOUNT>:<MAXLIMIT>:< TIMEOUT>

The alerting engine may send out individual alerts, one per matching event, until <THRESHOLDCOUNT> events arrive within <THRESHOLDTIME> seconds. The alerting engine 316 then enters into a summary state and will only issue a summary alert every <MAXLIMIT> seconds or every <MAXCOUNT> events, whichever comes first. If no matching events arrive for<TIMEOUT>seconds, the alerting engine returns to individual alert state.

In another embodiment, the structure of the alert action may be as follows:
alert(<THRESHOLD>:"<GROUPBY>"):<INDIVIDUALTEMPLATE>:<SUMMARY TEMPLATE>

This action behaves in a similar way as the second embodiment, except that matching events are grouped by one or more field values and the groups are summarized independently of each other.

### Alert Templates

Whenever a matching event causes an action to trigger, syslog interceptor 218B may locate the corresponding template file generated at step 312. The alerting engine that generates an alert at step 316 may use a template file as the email body for the alert, after performing any substitutions within the template at step 314. There may be several types of substitutions. Two non-limiting examples of substitutions are memory table 219 substitutions and SQL substitutions for data in relational database 222.

Memory table 219 substitution specifiers may have the following structure:
"<TABLENAME>:<ELEMENTNAME>:^

When performing the substitution, the alerting engine may replaces the entire specifier with the field value associated with the <ELEMENTNAME> in the memory table 219 <TABLENAME>.

SQL substitution specifiers may have the following structure:
^SQL:<SQL STATEMENT>;^

When performing the substitution, the alerting engine may replace the entire specifier with the result of executing <SQL STATEMENT> against the stateful evaluation data 226 in relational database 222.

In one example, SQL substitution specifiers may contain nested memory table 219 substitution specifiers, but not vice versa. Further in the example, only one level of nesting is permitted.

### Action Conditions and Alert Template Conditions

Actions and alert templates may contain one or more boolean (i.e. true or false) condition expressions which may evaluated by the rule processing engine when processing an event (e.g. matching a rule with an event and, if applicable, applying a template). If an action condition evaluates to false 306, the corresponding action is not triggered. If an alert template condition evaluates to false, the corresponding alert is not generated.

The structure of an action condition specifier may be as follows:
condition:<NUMERICEXPRESSION>=∼∼SQL:<SQL STATEMENT>;∼∼

The structure of an alert template condition may be as follows:
condition:<NUMERICEXPRESSION>=^SQL:<SQL STATEMENT>;^

The expression is evaluated by executing <SQL STATEMENT> against the relational database storing the stateful data (e.g. hosted by a PostgreSQL DBMS as described above) and then comparing the result against <NUMERICEXPRESSION> on the left-hand side of the = sign.

The stateful evaluation data 226 is used not only for filtering and template substitution, but also in Action Conditions and Alert Template Conditions as described in the preceding paragraphs. A condition may evaluate using stateful evaluation data 226 stored in the relational database 222 or stored in the memory tables 219. Both of these data stores contain information about previously processed events. The triggering of an alert 220 can then be dependent on the event just received as well as events that have been previously processed. Previously processed events may come from the same logging source (e.g. the same one of 220A, 220B, etc.) that the current event was received from or from other sources altogether (e.g. another one of 220A, 220B, etc.). In one non-limiting example, a policy could be set that sends an alert if there is a failed login at three or more servers, within a few minutes, identifying a possible attack.

In another example:
- Rule 1: - matches a successful logon event and stores the name of the user and the time of the logon in the memory table.
- Rule 2: - matches a failed logon event, but only if it was not preceded by a successful logon event for the same user within the previous 5 minutes. The action condition for this rule references the data that was stored in the memory table by Rule 1 to decide whether the current policy state satisfies the rule condition.

The stateful evaluation data 226 stored can be thought of as the overall security state of the client's system (e.g. monitored computer system 102) and because the log data sensor 108 allows the creation of policies that can alert on patterns within this state: the policies are the to be stateful.

Figure 3 illustrates processing of syslog format data; however, the processing of Windows log data may be performed in a similar manner. In one example, the processing/matching of Windows system log data is performed by a separate rules engine and polices (not shown) in log data sensor 108, having similar but different capabilities and characteristics. Because Windows events are logged as structured binary data rather than lines of plain text, the engine performs its matching based on values of extracted fields rather than pattern matching based on regular expressions. The ability to correlate events with each other may be limited to collecting together logged events that share a common field value. Complex matching conditions may be limited when there is no capability to correlate Windows events.

One or more embodiments have been described by way of example. It will be apparent to persons skilled in the art that a number of variations and modifications can be made. The scope of the claims should not be limited by the embodiments set forth in the examples, but should be given the broadest interpretation consistent with the description as a whole.

## Claims

1. A computer implemented method (300) for providing computer system security comprising:
maintaining a stateful network security policy (218) for configuring a computer processor to evaluate log data generated by at least one component (204, 202) of a monitored computer system (102);
receiving the log data at the computer processor (302, 210, 212, 214);
evaluating the log data (304); and,
performing actions (308, 310-316) directed by the stateful network security policy.

2. The method of claim 1 comprising maintaining stateful evaluation data (226) in response to evaluating the log data and wherein the stateful network security policy is responsive to the stateful evaluation data.

3. The method of claim 2 wherein the evaluating is performed by a rules engine (218), wherein the policy comprises a plurality of rules and wherein at least some of the rules are responsive to the stateful evaluation data.

4. The method of claim 3 wherein a rule specifies an action (220, 304, 308, 310) to be performed if an event in the log data matches the rule.

5. The method of claim 4 wherein the action in the rule comprises an action condition such that the performing of the action is responsive to a matching of the rule with the event and a successful evaluation of the action condition in response to the stateful evaluation data.

6. The method of claim 4 wherein the action comprises an alert action (310) responsive to a template (312) for defining and communicating an alert.

7. The method of claim 6 wherein the template comprises an alert condition such that the performing of the alert action is responsive to the matching of the rule with the event and a successful evaluation of the alert condition in response to the stateful evaluation data.

8. The method of any one of claims 1 to 7 wherein the log data comprises respective sequential events and wherein the steps of evaluating and performing include:
evaluating each event in sequence; and,
storing stateful evaluation state data in response to the evaluating of at least some events to assist with a later evaluating of at least some other events.

9. The method of any one of claims 1 to 8 wherein the stateful network security policy comprises a plurality of rules for evaluating the log data, at least some of the rules comprising actions to store data extracted from the log data.

10. The method of claim 9 wherein the data extracted is stored (308) for defining an alert (310) in accordance with an alert action to be performed.

11. The method of claim 10 wherein at least some of the rules comprise alert actions to define and communicate an alert.

12. The method of claim 11 wherein at least some of the alert actions use templates (312) for defining the alert, the templates defining substitutions using the data (219, 222) extracted from the log data.

13. The method of any one of claims claim 1 to 12 wherein the log data is received (214) in a syslog format.

14. A computer system (100) comprising at least one processor (108) and memory (108) storing instructions for configuring the computer system to provide computer system security, the computer system configured to perform a method in accordance with any one of claims 1 to 13.

15. A computer program product comprising a non-transitory medium (108) storing instructions (108) for configuring a processor (108), when executed, to provide computer system security, the instructions configuring the processor to perform a method in accordance with any one of claims 1 to 13.
